# EUROPEAN PATENT SPECIFICATION

(11) **EP 3 670 256 B1**
(45) Date of publication and mention of the grant of the patent: **26.01.2022**
(21) Application number: 19217344.1
(22) Date of filing: 18.12.2019
(51) Int. Cl.: B60Q 1/00, F21S 41/19, F21S 41/141, F21S 41/55

(54) **LIGHTING DEVICE FOR VEHICLES**
BELEUCHTUNGSVORRICHTUNG FÜR FAHRZEUGE
DISPOSITIF D'ÉCLAIRAGE POUR VÉHICULES

(30) Priority: 18.12.2018 IT 201800020119
(43) Date of publication of application: 24.06.2020
(73) Proprietor: Marelli Automotive Lighting Italy S.p.A. Con Socio Unico, 10078 Venaria Reale (TO) (IT)
(72) Inventor: FALESSI, Alessandro, 10078 VENARIA REALE (TO) (IT); LA FERRARA, Giuseppe, 10078 VENARIA REALE (TO) (IT); MUSCATO, Massimo, 10078 VENARIA REALE (TO) (IT)
(74) Representative: Plebani, Rinaldo

(56) References cited:
- DE-A1-102008 041 143
- DE-A1-102018 109 191
- FR-A1- 2 947 034
- FR-A1- 2 947 963
- JP-A- H08 167 455

## Description

### Technical field of the invention

The invention relates to a lighting device for vehicles, in particular a projector for a vehicle, such as a motor vehicle, in which the electric connection of a connector and of the relative electric cable, for example a power supply connector, during the assembling phase of the lighting device, is made easier and safe, so that not only the connection cannot be accidentally disconnected while being used, for example due to driving vibrations, but also "false connections" can be avoided, namely an imperfect connection during the assembling phase, which ensures anyway the electric connection, but does not ensure a correct mechanical connection.

### Prior art

As it is known, a projector for a vehicle, in particular a motor vehicle, comprises a housing accommodating at least one light source and a transparent element to close a front opening of the housing. The housing, especially in thin front projectors, consists of a body, which is open on the upper side, and of a top or cover, which is fixed to the body so as to close the upper opening and is used, during the assembling phase, to insert the light sources, for example LED lamps, and the attachments thereof (circuits and electric components, motor-driven or non-motor-driven positioning corrector, etc.).

The open-top body is generally provided on a rear lateral wall thereof with a series of access openings to access the light sources and with a female electric connector, which is connected, during the assembling phase, to a male electric connector provided with the power supply cable for the light sources and the attachments thereof.

These connectors are multipolar connectors and are generally coupled to one another in a snapping manner, so as to simultaneously allow both for an electric connection and for a mechanical connection, which prevents the electric connection from loosening up and/or be disconnected, for example due to the vibrations to which the lighting device is subjected in use. This type of connection is known, for example, from DE102012102639.

In case the mechanical connection between the two connectors is obtained in an imperfect manner, even in case additional safety mechanical connection devices are used in order to hold the two connectors coupled to one another, the lighting device passes the inspection, as the electric connection is active; however, subsequently, the electric connection loosens up in use due to the imperfect mechanical connection, so that the lighting device can be subjected to discontinuous faults, for example one or more light sources do not light up or a light beam rotation or adjustment device does not work. DE102008041143A1 corresponds to the preamble of claim 1 and does not solve these problems.

### Summary of the invention

The object of the invention is to further improve the stability of the connection between the first and the second connectors, preventing the vibrations present in the vehicle from helping disconnect, even though partially, the first and the second connectors and, especially, so as to make sure that, if the lighting device passes the electric inspection, the electric and mechanical connection between the two connectors is surely correct.

Therefore, the invention relates to a lighting device for vehicles, in particular to a front projector for motor vehicles, and to a vehicle provided with said lighting device, both having the features set forth in the appended claims.

In particular, the lighting device according to the invention comprises a housing configured to be mounted on board any vehicle and the housing comprises a base body delimiting an inner cavity and provided with at least one upper opening allowing access to the inner cavity and a cover which can be coupled to the base body, in an overlapping manner, in order to close said at least one upper opening.

At least one light source is housed in the inner cavity together with possible attachments thereof; the light source, usually one or more LED lamps, and the relative attachments are operated by a power supply system comprising an electric circuit housed in the inner cavity, a first connector electrically and mechanically connected to said electric circuit by means of a flexible connection element, and a second connector connected to a power supply cable.

The first connector is configured to be mounted on the outside of the base body and to receive the second connector through an electric and mechanical coupling; furthermore, the first connector is carried, in an integral manner, by a plate element and projects from a first face of the plate element.

The plate element, in turn, is mechanically integral to the flexible connection element.

A pair of guides are obtained on the outside of the base body on a lateral wall of the base body, which is adjacent to said at least one upper access opening, and are configured to be engaged in a sliding manner by respective opposite lateral edges of the plate element.

Indeed, in combination with what disclosed above, the cover carries, protruding on the outside thereof, in the area of a portion of the lateral wall arranged between the pair of guides, a protrusion, which is open towards the base body and internally delimits a reception seat, which is configured to receive the first and the second connectors, with the cover coupled to the base body, but, according to the main aspect of the invention, only when the first and the second connectors are electrically and mechanically coupled to one another in a correct manner.

The plate element preferably consists of a printed circuit, a rigid or flexible printed circuit, with a preferably rectangular shape, which is manufactured as one single piece together with the flexible connection element, which consists of a flat band-shaped cable, which, in turn, is connected to the aforesaid electric circuit in an integral manner.

The protrusion is defined by a bulged portion of the cover, which laterally projects from the cover in the area of a lower perimeter edge of the cover, which faces the base body.

The bulged portion of the cover is cup-shaped so as to delimit, on the side of the base body, the aforesaid reception seat.

When the first and the second connectors are connected to one another, an upper portion of the first and of the second connector facing the cover is suited to be inserted into the reception seat, which has a depth or width, measured perpendicularly to the portion of the lateral wall comprised between the pair of guides, which is substantially equal to a total depth or width of the first and of the second connector coupled together, always measured perpendicularly to the portion of the lateral wall comprised between the pair of guides.

Said upper portion of the first and of the second connector is configured to be entirely housed in the reception seat when the cover is coupled to the base body and when, simultaneously, the plate element is entirely inserted between the pair of guides, provided that the first and second connector are correctly coupled to one another, both electrically and mechanically.

In this way, the first and the second connector can be inserted within the reception seat substantially without clearances, measured in a direction that is perpendicular to the lateral wall, only if they are correctly coupled to one another, both electrically and mechanically.

Similarly, the cover cannot be inserted on the base body, when the plate element is inserted and fixed between the pair of guides, if the first and the second connector were not correctly coupled to one another, since , in that case, the protrusion intercepts with a bottom edge thereof the upper portion of the second connector.

Therefore, the assembling operator is forced to correctly couple the first and the second connector to one another, otherwise the assembly cannot be completed inserting the cover on the base body and/or inserting the connectors in the reception cavity of the protrusion, which, in order to do so, is cup-shaped.

Furthermore, after having ended the assembly with the connectors correctly coupled to one another, they cannot be disconnected, not even partially, even in the presence of strong vibrations or hits. Indeed, they are prevented from moving away from one another because they are inserted in the reception seat and, hence, are packed together between the lateral wall of the base body and the protrusion of the cover.

### Brief Description of the Drawings

Further features and advantages of the invention will be best understood upon perusal of the following description of a non-limiting embodiment thereof, with reference to the figures of the accompanying drawings, wherein:
- figure 1 shows a three-quarter, rear, perspective view of a lighting device according to the invention;
- figure 2 shows, on a larger scale, a three-quarter, exploded, rear, perspective view of a detail of the lighting device of figure 1, with parts removed for a better understanding;

- figure 3 shows a three-quarter, rear, perspective view of the same detail of figure 2, but with the lighting device partially assembled;
- figure 4 shows the same perspective view of figure 3 during a final assembling phase of the lighting device according to the invention;
- figure 5 schematically shows an elevation view, which also is sectional view along a cross section plane V-V, of the lighting device of figure 1; and
- figure 6 shows a rear, elevation view of a detail of the lighting device of figure 1.

### Detailed description

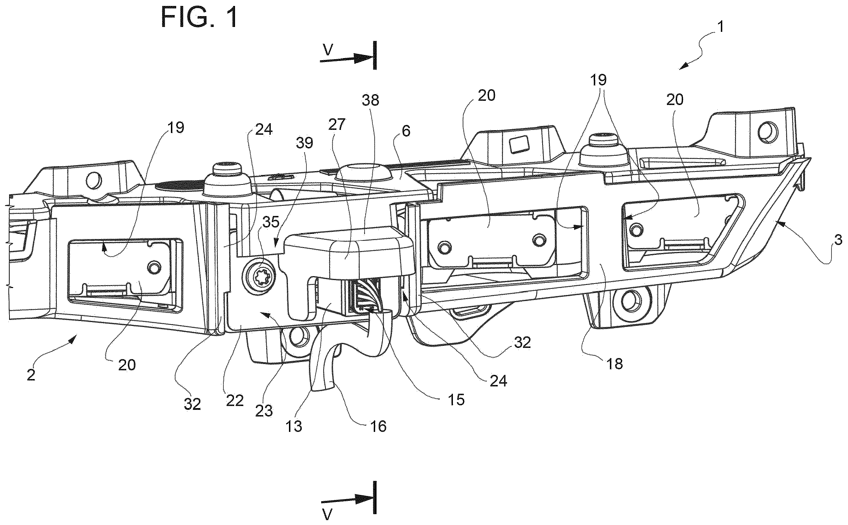

With reference to figure 1, number 1 indicates, as a whole, a lighting device for vehicles, in particular a thin front projector of a motor vehicle. However, it is clear that the disclosure of this description also applies to any lightning device for vehicles, headlamp or light.

The lighting device 1 comprises a housing 2 configured to be mounted on board a known vehicle, which is not shown for the sake of simplicity.

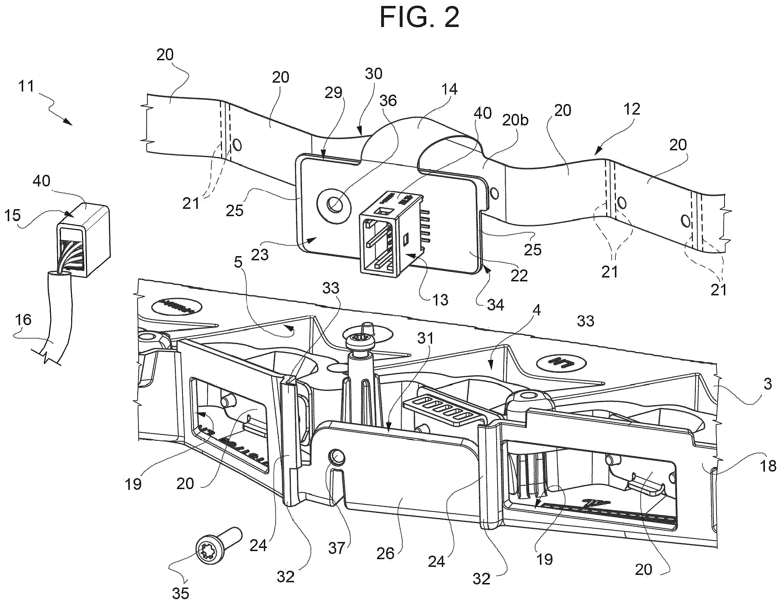

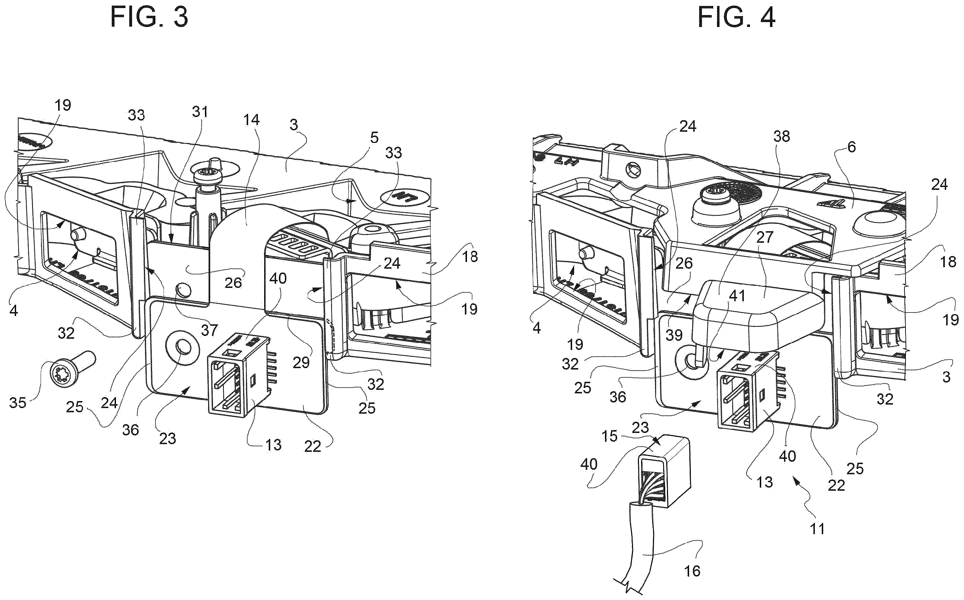

The housing 1 comprises a base body 3, which delimits an inner cavity 4 (figure 2) and is provided with at least one upper access opening 5 allowing access to the inner cavity 4, and a cover 6, which can be coupled, in an overlapping manner, to the base body 3 (figures 4, 5 and 6) so as to close said at least one upper opening 5.

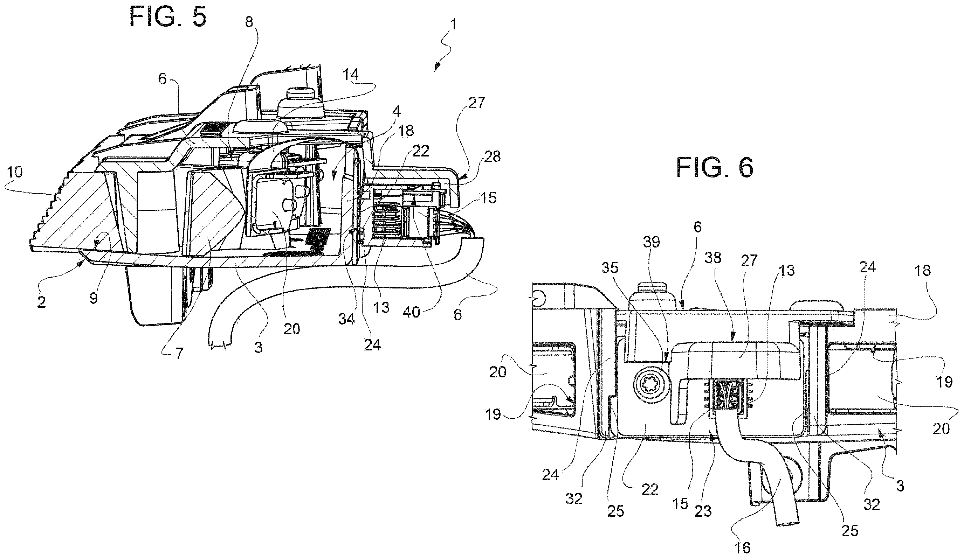

Inside the cavity 4 (figure 5) there are housed, in a known manner which is only schematically shown herein, at least one light source 7 (generally speaking, a plurality of light sources 7 consisting of LED lamps) and possible attachments 8 thereof, which are known and only schematically shown herein, for example to control the light source 7 and/or to adjust the direction of emission of a light beam (not shown) emitted by it.

The housing 2 is also provided with a front opening 9, which is closed in a fluid-tight manner by a lens 10, which is clear (namely, simply transparent) or optically active (for example, provided with micro-prisms or other optical apparatuses).

The lighting device 1 further comprises a power supply system 11 (figure 2) for said at least one light source 7 and possible attachments 8 thereof.

The power supply system 11 comprises an electric circuit 12 housed in a known manner in the inner cavity 4, a first connector 13 electrically and mechanically connected to the electric circuit 12 by means of a flexible connection element 14, and a second connector 15 connected to a power supply cable 16.

The first connector 13 is configured to be mounted on the outside of the base body 3 and to receive the second connector 15 through an electric and mechanical coupling.

The first connector 13 and the second connector 15 preferably are known multipolar connectors, which are coupled to one another both electrically and mechanically, for example in a snapping manner, through sliding insertion into one another.

In any case, the connector 13 preferably is a female connector and the connector 15 preferably is a male connector; obviously, this configuration can be switched and, in that case, the connector 13 is a male connector and the connector 15 is a female connector.

The base body 3 has a lateral wall 18, in particular a rear lateral wall, which delimits the cavity 4 on the opposite side relative to the lens 10 and is preferably provided with one or more access openings 19 allowing access to the inner cavity 4 and to the light source/s 7 housed on the inside, as well as to the attachments 8.

In the preferred, though non-limiting embodiment shown herein, the electric circuit 12 is band-shaped and comprise a plurality of printed circuit cards 20 connected to one another in a hinged manner (for example, by means of flaps or elastically flexible segments 21 thereof - figure 2). The cards 20 are configured to receive, through electric and mechanical connection and on the opposite side relative to the lateral wall 18 of the base body 3, said at least one light sources 7 and the possible attachments 8 thereof.

For example, each card 20 can receive a respective LED lamp 7 and/or a relative attachment 8 thereof.

The cards 20 can be rigid or flexible and are arranged in series one after the other along the entire length development of the band, making up the electric circuit 12.

A card 20b, for example an intermediate card, is connected, in an integral manner as one single piece, to the flexible connection element 14, which projects from the card 20b on the side of the cover 6 and towards the lateral wall 18 of the base body 3.

According to a first aspect of the invention, the first connector 13 is carried, in an integral manner, by a plate element 22 and projects from a first face 23 of the plate element 22; furthermore, the plate element 22 is mechanically integral to the flexible connection element 14.

The lateral wall 18 of the base body 3 is adjacent to said at least one upper access opening 5 of the base body 3 and carries, on the outside of the base body 3, a pair of guides 24, which are configured to be engaged in a sliding manner by respective opposite lateral edges 25 of the plate element 22.

Finally, in combination with what disclosed above, the cover 6 carries on the outside, projecting from it, in the area of a portion 26 of the lateral wall 18 arranged between the guides 24 of the aforesaid pair of guides, a protrusion 27, which is open towards the base body 3 and internally delimits a reception seat 28 (figure 5), which is configured to receive the connectors 13 and 15 with the cover 6 coupled to the base body 3.

According to the invention, though, the protrusion 27 and the reception seat 28 are configured so that the reception seat 28 is suited to receive the connectors 15 and 13 only when the first connector 13 and the second connector 15 are electrically and mechanically coupled to one another in a correct manner.

The plate element 22 consists of a rigid or flexible printed circuit, which is manufactured as one single piece together with the flexible connection element 14, which consists of a flat band-shaped cable, which, in turn, is connected in an integral manner to the electric circuit 12, which, in particular, is manufactured as one single piece together with the card 20b.

The flat cable 14, according to an aspect of the invention, connects an upper longitudinal edge 29 of the plate element 22, which is perpendicular to the lateral edges 25, to an upper longitudinal edge 30 of the card 20b (figure 2) .

The flexible connection element or flat cable 14 is further configured to remain inserted, in use, between the cover 6 and an upper edge 31 of the lateral wall 18 of the base body 3.

The edge 31 is immediately adjacent to the cover 6, so that the plate element 22 and part of the flexible connection element 14 extend anyway on the outside of the housing 2.

Furthermore, the flexible connection element 14 has a length that is such as to allow the plate element 22 to freely slide along the pair of guides 24.

In particular, the flat, flexible cable 14 is configured to allow the plate element 22, even when the cover 6 is already coupled to the base body 3, to engage the guides 24 in a sliding manner with its edges 25 and on the side of its upper edge 29, thus being coupled to them already in the area of a lower end 32 of the guides 24, opposite the cover 6.

In particular, the guides 24 are configured to receive the plate element 22 in a sliding manner both through their lower end 32 and through an opposite upper end 33 thereof (figures 2 and 3), immediately adjacent to the cover 6, so that the plate element 22, in the absence of the cover 6, can be coupled to and uncoupled from the pair of guides 24 both on the side of the lower end 32 thereof and on the side of the upper end 33 thereof.

The plate element 22 is further configured to be coupled to the lateral wall 18 of the base body 3, parallel to and against it, with the first face 23 facing away from the lateral wall 18 and with a second face 34 thereof (figures 2 and 5), which is opposite the first face 23, coupled in contact against the portion 26 of the lateral wall 18 arranged between the pair of guides 24.

The lighting device 1 further comprises at least one screw 35 to fix the plate element 22 to the portion 26 of the lateral wall 18 of the base body 3 in an integral manner.

To this aim, the plate element 22 and the portion 26 of the lateral wall 18 are provided with respective reception holes 36 and 37, respectively, for said at least one screw 35, which are aligned with one another when the plate element 22 is inserted between the pair of guides 24.

The reception holes 36 and 37 are further arranged between the pair of guides 24, on the side relative to the protrusion 27 of the cover 6.

The protrusion 27, in the example shown herein, is defined by a bulged portion 38 of the cover 6, which laterally projects from the cover 6 in the area of a lower perimeter edge 39 of the cover 6, which faces the base body 3.

The bulged portion 38 of the cover 6 is cup-shaped so as to delimit, on the side of the base body 3, the aforesaid reception seat 28, which has a depth or width, measured perpendicularly to the portion 26 of the lateral wall 18, which, with the first and second connector 13,15 correctly coupled to one another, is substantially equal to a total depth or width of an upper portion 40 of said connectors facing the cover 6 and configured to be entirely housed in the reception seat 28 when the cover 6 is coupled to the base body 3 and the plate element 22 is entirely inserted between the pair of guides 24.

In this way, when the first and the second connector 13,15 are coupled, they can be inserted within the reception seat 28 substantially without clearances measured in a direction that is perpendicular to the lateral wall 18, only if they are correctly coupled to one another, both electrically and mechanically.

Similarly, thanks to the structure described above, the cover 6 cannot be inserted on the base body 3, when the plate element 22 is inserted and fixed between the pair of guides 24, if the connectors 13,15 were not correctly coupled to one another. Indeed, if they are not correctly coupled, the protrusion 27 intercepts, with a lower edge 41 thereof, the upper portion 40 of the second connector 15, thus preventing the cover 6 from being mounted.

Owing to the above, it is evident that a structure that is relatively simple and economic to be implemented eliminates any chance of the lighting device 1 and the connectors 13 and 15 being incorrectly coupled to one another by accident, thus creating "false contacts".

Indeed, the assembling operator can let the flat cable 14, with the plate element 22 and the connector 13, out of the cavity 4 after having assembled within the cavity 4 the band-shaped electric circuit 12.

Subsequently, the operator can mount the cover 6 and then couple the plate element 22 to the guides 24, subject to the coupling of the connector 15 to the connector 13, fitting the ends 32 on the side of the edge 29, or insert the plate element 22 into the guides 24 with the cover 6 still unassembled and then, subsequently, couple the connector 15 to the connector 13.

In both cases, if the coupling of the connectors 13,15 is not correct, the operator cannot complete the assembly even before getting to the electric inspection. In the first case, indeed, when, by causing the plate element 22 to slide, he tries and insert the coupled connectors 13,15 into the reception seat 28, the protrusion 27 intercepts the connector 15, thus forbidding the assembly. In the second case, the cover 6 cannot be inserted in position, as the protrusion 27, again, hits the connector 15. Therefore, the operator is forced to check the coupling of the connectors 13,15 until it is correct.

In use, then, the protrusion 27 is a further safety element keeping the connectors 13 and 15 coupled to one another.

Therefore, all the objects of the invention are reached.

## Claims

1. A lighting device (1) for vehicles comprising:
- a housing (2) configured to be mounted on board a vehicle and in turn comprising a base body (3) delimiting an inner cavity (4) and provided with at least one upper opening (5) for access to said inner cavity and a cover (6) that is able to be overlappingly coupled to the base body for closing the at least one upper opening;
- at least one light source (7) housed in said inner cavity together with any attachments (8) thereof; and
- a power supply system (11) for the at least one light source and any attachments thereof, comprising an electric circuit (12) housed in said inner cavity, a first connector (13) electrically and mechanically connected to said electric circuit by means of a flexible connection element (14), and a second connector (15) connected to a supply cable (16), the first connector being configured to be mounted on the outside of the base body (3) and to receive said second connector in electrical and mechanical coupling;
**characterized in that**
i) the first connector (13) is carried integral by a plate element (22) and projects from a first face (23) of the plate element, the plate element being mechanically integral with said flexible connection element (14);
ii) a lateral wall (18) of the base body (3), arranged adjacent to said at least one upper access opening of the base body, carries externally to the base body a couple of guides (24) configured to be slidingly engaged by respective opposite lateral edges (25) of the plate element (22);
iii) the cover (6) carries externally overhanging, at a portion (26) of said lateral wall (18) arranged between said guides (24), a protrusion (27) open towards the base body and internally delimiting a reception seat (28) configured to receive the first and the second connectors (13,15) with the cover (6) coupled to the base body (3) only when the first and the second connector (13,15) are electrically and mechanically coupled to each other correctly.

2. The lighting device according to claim 1, **characterized in that** the plate element (22) consists of a printed circuit, rigid or flexible, provided integral in one piece with said flexible connection element (14), which consists of a flat band-shaped cable, in turn integrally connected to said electric circuit (12).

3. The lighting device according to claim 1 or 2, **characterized in that** said electric circuit (12) is band-shaped and comprises a plurality of cards (20) connected to one another in an hinged manner and configured to receive, in electrical and mechanical connection, and from the opposite side of said lateral wall (18) of the base body, said at least one light source and any attachments thereof, a first (20b) of said cards being connected integral in one piece to the flexible connection element (14), which projects from said first card (20b) on the side of the cover (6) and towards the lateral wall (18) of the base body.

4. The lighting device according to one of the preceding claims, **characterized in that** the flexible connection element (14) is configured to remain inserted between the cover (6) and an upper edge (31) of the lateral wall of the base body, said upper edge being immediately adjacent to the cover, so that the plate element (22) and part of the flexible connection element (14) extend outside the housing (2); the flexible connection element (14) having a length such as to allow the plate element (22) to slide freely along said couple of guides (24) and to slidingly engage the same at a bottom end (32) thereof opposite to said cover, with the cover coupled to the base body.

5. The lighting device according to claim 4, **characterized in that** said couple of guides (24) are configured to slidingly receive said plate element (22) both through their said bottom end (32) and through an upper opposite end (33) thereof, immediately adjacent to said cover, so that the plate element (22), in the absence of the cover (6), can be coupled to, and decoupled from, said couple of guides (24) both on the side of the bottom end thereof and on the side of the upper end thereof.

6. The lighting device according to one of the preceding claims, **characterized in that** said first and second connector (13,15) are multipolar connectors which couple to each other both electrically and mechanically, the first connector (13) being preferably a female connector and the second connector (15) being preferably a male connector; the plate element (22) being configured to couple with the lateral wall (18) of the base body, parallel to and against the same, with said first face (23) facing the side opposite said lateral wall (18) and with a second face (34) of the plate element, opposite the first face, coupled in contact against said portion (26) of the lateral wall arranged between said couple of guides (24).

7. The lighting device according to claim 6, **characterized in that** it further comprises at least one screw (35) to integrally fix the plate element (22) to said portion (26) of the lateral wall of the base body arranged between said couple of guides; said plate element (22) and said lateral wall (18) being provided with respective reception holes (36,37) for said at least one screw aligned with each other when the plate element (22) is inserted between the couple of guides (24); said reception holes (36,37) being arranged between said couple of guides (24), laterally with respect to, i.e. on the side of, said protrusion (27) of the cover.

8. The lighting device according to one of the preceding claims, **characterized in that** said protrusion (27) is defined by a bulged portion (38) of said cover, laterally projecting from said cover at a bottom perimeter edge (39) of the cover, facing the base body; said bulged portion (38) of the cover being cup-shaped so as to delimit on the side of said base body (3) said reception seat (28), which has a depth or width, measured perpendicular to said portion (26) of the lateral wall arranged between said couple of guides (24), substantially equal, with the first and second connector (13,15) correctly coupled, to a total depth or width of an upper portion (40) of said first and second connector (13,15) facing the cover (6) and configured to be entirely housed in the reception seat (28) with the cover coupled with the base body and the plate element (22) wholly inserted between the couple of guides (24), so that, with said first and second connector (13,15) coupled, both of them can be inserted in the reception seat (28) substantially without play, measured in a direction perpendicular to the lateral wall (18), only if they are correctly coupled to each other, both mechanically and electrically.

9. The lighting device according to claim 8, **characterized in that** the cover (6) cannot be inserted on the base body, with said plate element (22) inserted and fixed between the couple of guides (24), if said first and second connector (13,15) have not been correctly coupled to each other, since said protrusion (27) intercepts the upper portion (40) of the second connector (15) with a bottom edge (41) thereof.

10. A vehicle comprising a lighting device (1) according to one of the preceding claims, wherein the lighting device (1) is a projector or a headlamp.

## Patentansprüche

1. Beleuchtungsvorrichtung (1) für Fahrzeuge, umfassend:
- ein Gehäuse (2), das dazu konfiguriert ist, an Bord eines Fahrzeugs montiert zu werden, und seinerseits einen Grundkörper (3), der einen inneren Hohlraum (4) begrenzt und mit wenigstens einer oberen Öffnung (5) für den Zugang zu dem inneren Hohlraum versehen ist, und eine Abdeckung (6), die überlappend mit dem Grundkörper gekoppelt werden kann, um die wenigstens eine obere Öffnung zu verschließen, umfasst;
- wenigstens eine Lichtquelle (7), die in dem inneren Hohlraum zusammen mit etwaigen Anbauteilen (8) davon untergebracht ist; und
- ein Stromversorgungssystem (11) für die wenigstens eine Lichtquelle und deren etwaige Anbauteile, umfassend eine elektrische Schaltung (12), die in dem inneren Hohlraum untergebracht ist, einen ersten Verbinder (13), der mittels eines flexiblen Verbindungselements (14) elektrisch und mechanisch mit der elektrischen Schaltung verbunden ist, und einen zweiten Verbinder (15), der mit einem Versorgungskabel (16) verbunden ist, wobei der erste Verbinder dazu konfiguriert ist, an der Außenseite des Grundkörpers (3) montiert zu werden und den zweiten Verbinder in elektrischer und mechanischer Kopplung aufzunehmen;
**dadurch gekennzeichnet, dass**
i) der erste Verbinder (13) integral von einem Plattenelement (22) getragen wird und von einer ersten Fläche (23) des Plattenelements hervorsteht, wobei das Plattenelement mit dem flexiblen Verbindungselement (14) mechanisch integriert ist;
ii) eine Seitenwand (18) des Grundkörpers (3), die neben der wenigstens einen oberen Zugangsöffnung des Grundkörpers angeordnet ist, außerhalb des Grundkörpers ein Paar an Führungseinrichtungen (24) trägt, die dazu konfiguriert sind, mit den jeweiligen gegenüberliegenden Seitenkanten (25) des Plattenelements (22) gleitend in Eingriff zu gelangen;
iii) die Abdeckung (6) außen an einem zwischen den Führungseinrichtungen (24) angeordneten Abschnitt (26) der Seitenwand (18) einen Vorsprung (27) trägt, der in Richtung zu dem Grundkörper offen ist und innen einen Aufnahmesitz (28) begrenzt, der dazu konfiguriert ist, den ersten und den zweiten Verbinder (13, 15) mit an den Grundkörper (3) gekoppelter Abdeckung (6) nur dann aufzunehmen, wenn der erste und der zweite Verbinder (13, 15) elektrisch und mechanisch korrekt miteinander gekoppelt sind.

2. Beleuchtungsvorrichtung nach Anspruch 1, **dadurch gekennzeichnet, dass** das Plattenelement (22) aus einer starren oder flexiblen gedruckten Schaltung besteht, die integral in einem Stück mit dem flexiblen Verbindungselement (14) vorgesehen ist, das aus einem flachen, bandförmigen Kabel besteht, das seinerseits integral mit der elektrischen Schaltung (12) verbunden ist.

3. Beleuchtungsvorrichtung nach Anspruch 1 oder 2, **dadurch gekennzeichnet, dass** die elektrische Schaltung (12) bandförmig ist und mehrere Karten (20) umfasst, die gelenkig miteinander verbunden sind und dazu konfiguriert sind, in elektrischer und mechanischer Verbindung von der gegenüberliegenden Seite der Seitenwand (18) des Grundkörpers her die wenigstens eine Lichtquelle und deren etwaige Anbauteile aufzunehmen, wobei eine erste (20b) der Karten integral in einem Stück mit dem flexiblen Verbindungselement (14) verbunden ist, das von der ersten Karte (20b) auf der Seite der Abdeckung (6) und in Richtung zu der Seitenwand (18) des Grundkörpers hervorsteht.

4. Beleuchtungsvorrichtung nach einem der vorangehenden Ansprüche, **dadurch gekennzeichnet, dass** das flexible Verbindungselement (14) so konfiguriert ist, dass es zwischen der Abdeckung (6) und einer oberen Kante (31) der Seitenwand des Grundkörpers eingesetzt bleibt, wobei die obere Kante unmittelbar an die Abdeckung angrenzt, so dass sich das Plattenelement (22) und ein Teil des flexiblen Verbindungselements (14) außerhalb des Gehäuses (2) erstrecken; wobei das flexible Verbindungselement (14) eine solche Länge hat, dass das Plattenelement (22) frei entlang des Paares der Führungseinrichtungen (24) gleiten kann und an einem unteren Ende (32) desselben gegenüber der Abdeckung gleitend in diese eingreifen kann, wobei die Abdeckung mit dem Grundkörper gekoppelt ist.

5. Beleuchtungsvorrichtung nach Anspruch 4, **dadurch gekennzeichnet, dass** das Paar der Führungseinrichtungen (24) dazu konfiguriert ist, das Plattenelement (22) sowohl durch deren unteres Ende (32) als auch durch deren oberes, der Abdeckung unmittelbar gegenüberliegendes Ende (33) gleitend aufzunehmen, so dass das Plattenelement (22) bei Abwesenheit der Abdeckung (6) mit dem Paar der Führungseinrichtungen (24) sowohl auf der Seite des unteren Endes derselben als auch auf der Seite des oberen Endes derselben gekoppelt und davon entkoppelt werden kann.

6. Beleuchtungsvorrichtung nach einem der vorangehenden Ansprüche, **dadurch gekennzeichnet, dass** der erste und der zweite Verbinder (13, 15) mehrpolige Verbinder sind, die sowohl elektrisch als auch mechanisch miteinander koppeln, wobei der erste Verbinder (13) vorzugsweise eine Verbinderbuchse ist und der zweite Verbinder (15) vorzugsweise ein Verbinderstecker ist; wobei das Plattenelement (22) dazu konfiguriert ist, mit der Seitenwand (18) des Grundkörpers parallel zu dieser und gegen diese zu koppeln, wobei die erste Fläche (23) der der Seitenwand (18) gegenüberliegenden Seite zugewandt ist und eine zweite Fläche (34) des Plattenelements, die der ersten Fläche gegenüberliegt, in Kontakt mit dem Abschnitt (26) der Seitenwand gekoppelt ist, der zwischen dem Paar der Führungseinrichtungen (24) angeordnet ist.

7. Beleuchtungsvorrichtung nach Anspruch 6, **dadurch gekennzeichnet, dass** sie ferner wenigstens eine Schraube (35) umfasst, um das Plattenelement (22) integral an dem Abschnitt (26) der Seitenwand des Grundkörpers zu befestigen, der zwischen dem Paar von Führungseinrichtungen angeordnet ist; wobei das Plattenelement (22) und die Seitenwand (18) mit jeweiligen Aufnahmelöchern (36, 37) für die wenigstens eine Schraube versehen sind, die aufeinander ausgerichtet sind, wenn das Plattenelement (22) zwischen dem Paar von Führungseinrichtungen (24) eingesetzt ist; wobei die Aufnahmelöcher (36, 37) zwischen dem Paar von Führungseinrichtungen (24) seitlich in Bezug auf den, d.h. auf der Seite des Vorsprungs (27) der Abdeckung angeordnet sind.

8. Beleuchtungsvorrichtung nach einem der vorangehenden Ansprüche, **dadurch gekennzeichnet, dass** der Vorsprung (27) durch einen gewölbten Abschnitt (38) der Abdeckung definiert ist, der seitlich von der Abdeckung an einer unteren Umfangskante (39) der Abdeckung hervorsteht und dem Grundkörper zugewandt ist; wobei der gewölbte Abschnitt (38) der Abdeckung schalenförmig ist, um somit auf der Seite des Grundkörpers (3) den Aufnahmesitz (28) zu begrenzen, der eine Tiefe oder Breite, gemessen senkrecht zu dem Abschnitt (26) der Seitenwand, der zwischen dem Paar von Führungseinrichtungen (24) angeordnet ist, aufweist, die bei korrekt gekoppeltem ersten und zweiten Verbinder (13, 15) im Wesentlichen gleich einer Gesamttiefe oder -breite eines oberen Abschnitts (40) des ersten und des zweiten Verbinders (13, 15) ist, die der Abdeckung (6) zugewandt sind, und dazu konfiguriert ist, vollständig in dem Aufnahmesitz (28) untergebracht zu werden, wobei die Abdeckung mit dem Grundkörper gekoppelt ist und das Plattenelement (22) vollständig zwischen dem Paar von Führungseinrichtungen (24) eingesetzt ist, so dass dann, wenn der erste und der zweite Verbinder (13, 15) gekoppelt sind, beide nur dann, wenn sie sowohl mechanisch als auch elektrisch korrekt miteinander gekoppelt sind, im Wesentlichen spielfrei, gemessen in einer Richtung senkrecht zu der Seitenwand (18), in den Aufnahmesitz (28) eingesetzt werden können.

9. Beleuchtungsvorrichtung nach Anspruch 8, **dadurch gekennzeichnet, dass** die Abdeckung (6) nicht auf den Grundkörper aufgesetzt werden kann, wobei das Plattenelement (22) zwischen dem Paar von Führungseinrichtungen (24) eingesetzt und befestigt wird, wenn der erste und der zweite Verbinder (13, 15) nicht korrekt miteinander gekoppelt sind, da der Vorsprung (27) den oberen Teil (40) des zweiten Verbinders (15) mit einer Unterkante (41) desselben abfängt.

10. Fahrzeug, umfassend eine Beleuchtungsvorrichtung (1) nach einem der vorangehenden Ansprüche, wobei die Beleuchtungsvorrichtung (1) ein Projektor oder ein Scheinwerfer ist.

## Revendications

1. Dispositif d'éclairage (1) pour véhicules comprenant :
- un boîtier (2) configuré pour être monté à bord d'un véhicule et comprenant à son tour un corps de base (3) délimitant une cavité intérieure (4) et pourvu d'au moins une ouverture supérieure (5) pour l'accès à ladite cavité intérieure et un couvercle (6) qui est apte à être associé par chevauchement au corps de base pour fermer la au moins une ouverture supérieure ;
- au moins une source de lumière (7) logée dans ladite cavité intérieure conjointement avec une fixation (8) quelconque de celle-ci ; et
- un système d'alimentation électrique (11) pour la au moins une source de lumière et une fixation quelconque de celle-ci, comprenant un circuit électrique (12) logé dans ladite cavité intérieure, un premier connecteur (13) connecté électriquement et mécaniquement audit circuit électrique au moyen d'un élément de connexion flexible (14), et un deuxième connecteur (15) connecté à un câble d'alimentation (16), le premier connecteur étant configuré pour être monté sur le côté extérieur du corps de base (3) et pour recevoir ledit deuxième connecteur en couplage électrique et mécanique ;
**caractérisé en ce que**
i) le premier connecteur (13) est réalisé d'un seul tenant par un élément plaque (22) et fait saillie d'une première face (23) de l'élément plaque, l'élément plaque étant mécaniquement d'un seul tenant avec ledit élément de connexion flexible (14) ;
ii) une paroi latérale (18) du corps de base (3), agencée de manière adjacente à ladite au moins une ouverture d'accès supérieure du corps de base, porte de manière externe par rapport au corps de base un couple de guides (24) configurés pour être mis en prise de manière coulissante par des bords latéraux (25) opposés respectifs de l'élément plaque (22) ;
iii) le couvercle (6) porte de manière externe en surplomb, au niveau d'une portion (26) de ladite paroi latérale (18) agencée entre lesdits guides (24), une partie saillante (27) ouverte en direction du corps de base et délimitant de manière interne un siège de réception (28) configuré pour recevoir le premier et deuxième connecteur (13, 15) avec le couvercle (6) assemblé au corps de base (3) uniquement lorsque le premier et le deuxième connecteur (13, 15) sont assemblés électriquement et mécaniquement l'un à l'autre correctement.

2. Dispositif d'éclairage selon la revendication 1, **caractérisé en ce que** l'élément plaque (22) consiste en un circuit imprimé, rigide ou flexible, qui est fourni intégré dans une seule pièce avec ledit élément de connexion flexible (14), qui consiste en un câble en forme de bande plate, à son tour connecté d'un seul tenant audit circuit électrique (12).

3. Dispositif d'éclairage selon la revendication 1 ou 2, **caractérisé en ce que** ledit circuit électrique (12) est en forme de bande et comprend une pluralité de cartes (20) connectées les unes aux autres d'une manière articulée et configurée pour recevoir, en connexion électrique et mécanique, et à partir du côté opposé de ladite paroi latérale (18) du corps de base, ladite au moins une source de lumière et une fixation quelconque de celle-ci, une première (20b) desdites cartes étant connectée dans une seule pièce monobloc à l'élément de connexion flexible (14), qui fait saillie à partir de ladite première carte (20b) sur le côté du couvercle (6) et en direction de la paroi latérale (18) du corps de base.

4. Dispositif d'éclairage selon l'une quelconque des revendications précédentes, **caractérisé en ce que** l'élément de connexion flexible (14) est configuré pour rester inséré entre le couvercle (6) et un bord supérieur (31) de la paroi latérale du corps de base, ledit bord supérieur étant immédiatement adjacent au couvercle, de sorte que l'élément plaque (22) et une partie de l'élément de connexion flexible (14) s'étendent à l'extérieur du boîtier (2) ; l'élément de connexion flexible (14) ayant une longueur de nature à permettre à l'élément plaque (22) de coulisser librement le long dudit couple de guides (24) et d'être en prise de manière coulissante avec celui-ci au niveau d'une extrémité inférieure (32) de celui-ci à l'opposé dudit couvercle, avec le couvercle assemblé au corps de base.

5. Dispositif d'éclairage selon la revendication 4, **caractérisé en ce que** ledit couple de guides (24) sont configurés pour recevoir de manière coulissante ledit élément plaque (22) à la fois à travers leur dite extrémité inférieure (32) et à travers une extrémité opposée supérieure (33) de celui-ci, de manière immédiatement adjacente audit couvercle, de sorte que l'élément plaque (22), en l'absence du couvercle (6), peut être accouplé à, et découplé de, ledit couple de guides (24) à la fois sur le côté de l'extrémité inférieure de celui-ci et sur le côté de l'extrémité supérieure de celui-ci.

6. Dispositif d'éclairage selon l'une quelconque des revendications précédentes, **caractérisé en ce que** lesdits premier et deuxième connecteurs (13, 15) sont des connecteurs multipolaires qui s'assemblent l'un à l'autre à la fois électriquement et mécaniquement, le premier connecteur (13) étant de préférence un connecteur femelle et le deuxième connecteur (15) étant de préférence un connecteur mâle ; l'élément plaque (22) étant configuré pour s'assembler avec la paroi latérale (18) du corps de base, parallèlement à et contre celui-ci, avec ladite première face (23) tournée vers le côté opposé à ladite paroi latérale (18) et avec une deuxième face (34) de l'élément plaque, opposée à la première face, assemblée en contact contre ladite portion (26) de la paroi latérale agencée entre ledit couple de guides (24) .

7. Dispositif d'éclairage selon la revendication 6, **caractérisé en ce qu'**il comprend en outre au moins une vis (35) pour fixer d'un seul tenant l'élément plaque (22) à ladite portion (26) de la paroi latérale du corps de base agencé entre ledit couple de guides ; ledit élément plaque (22) et ladite paroi latérale (18) étant pourvus respectivement de trous de réception (36, 37) pour ladite au moins une vis alignés l'un sur l'autre lorsque l'élément plaque (22) est inséré entre le couple de guides (24) ; lesdits trous de réception (36, 37) étant agencés entre ledit couple de guides (24), latéralement par rapport à, c'est-à-dire sur le côté de, ladite partie saillante (27) du couvercle.

8. Dispositif d'éclairage selon l'une quelconque des revendications précédentes, **caractérisé en ce que** ladite partie saillante (27) est définie par une portion bombée (38) dudit couvercle, se projetant latéralement à partir dudit couvercle au niveau d'un bord de périmètre inférieur (39) du couvercle, tournée vers le corps de base ; ladite portion bombée (38) du couvercle étant cupuliforme de manière à délimiter sur le côté dudit corps de base (3) ledit siège de réception (28), qui présente une profondeur ou largeur, mesurée perpendiculairement à ladite portion (26) de la paroi latérale agencée entre ledit couple de guides (24), sensiblement égale, avec les premier et deuxième connecteurs (13, 15) correctement assemblés, à une profondeur ou largeur totale d'une portion supérieure (40) desdits premier et deuxième connecteurs (13, 15) tournée vers le couvercle (6) et configurée pour être entièrement logée dans le siège de réception (28) avec le couvercle assemblé au corps de base et l'élément plaque (22) entièrement inséré entre le couple de guides (24), de sorte que, avec lesdits premier et deuxième connecteurs (13, 15) assemblés, les deux peuvent être insérés dans le siège de réception (28) sensiblement sans jeu, mesuré dans une direction perpendiculaire à la paroi latérale (18), uniquement s'ils sont correctement assemblés l'un à l'autre, à la fois mécaniquement et électriquement

9. Dispositif d'éclairage selon la revendication 8, **caractérisé en ce que** le couvercle (6) ne peut être inséré sur le corps de base, avec ledit élément plaque (22) inséré et fixé entre le couple de guides (24), si lesdits premier et deuxième connecteurs (13, 15) n'ont pas été correctement assemblés l'un à l'autre, étant donné que ladite partie saillante (27) intercepte la portion supérieure (40) du deuxième connecteur (15) avec un bord inférieur (41) de celle-ci.

10. Véhicule comprenant un dispositif d'éclairage (1) selon l'une quelconque des revendications précédentes, dans lequel le dispositif d'éclairage (1) est un projecteur ou un phare.
